# EUROPEAN PATENT APPLICATION

(11) **EP 3 982 313 A1**
(43) Date of publication of application: **13.04.2022**
(21) Application number: 20200923.9
(22) Date of filing: 09.10.2020
(51) Int. Cl.: G06Q 10/08, G06Q 10/04

(54) **PRECISE TRANSPORTATION TIME OF SHIPMENT ITEMS FOR SUPPLY CHAIN MANAGEMENT**

(71) Applicant: Atos Nederland B.V., 1185 MC Amstelveen (NL)
(72) Inventor: Pijper, Mark, 2011SK Haarlem (NL); Dijkstra, Erwin, 6584 BK Molenhoek (NL); Wissink, Bert, 9675 RE Winschoten (NL)
(74) Representative: Novagraaf Technologies

(57) **Abstract**

Method for determining a transportation time of a shipment item from a departure point to a destination point, one of said departure point or destination point being associated with a time constraint, and said method comprising
- the determination (S1) of a sequence of route legs joining said departure point to said destination point; each route leg being associated with a transportation mean;
- the determination (S2) of respective transportation time for each leg, said determination being done starting from the one among departure point or destination point being associated with a time constraint;
- the modification (S3) of at least one respective transportation time determined for a route leg associated with roads, by applying a set of transportation time modifications;
- the determination (S4) of said transportation time by adding said respective determined transportation time.

## Description

### Technical Field

The invention relates to the fields of supply chain management and logistics. It comprises determining a precise transportation time between a departure point and a destination point.

In particular, according to embodiments, it relates to the determination of a time for departure of a shipment item from a departure point that is compliant with a planned time of arrival at a destination point. According to embodiments, it also relates to the determination of a precise arrival time of a shipment item given a known departure time..

### Background

At the moment, creating trust in on-time delivery is a challenge. Delayed deliveries generate huge costs when production processes need to be stopped while waiting for the delivery.

In consequence, plants and other facilities order shipment items (e.g. materials or manufactured products, etc.) way ahead of the time of need to minimize the industrial risk of delayed deliveries. As a result, they are piling up stocks and freezing capital.

Some proposals have been made to compute a transportation time between a departure point and a destination point, so that it may be easier to plan the delivery of shipment item at the best timing before the time of need. However, these proposals are most of the time not adapted for supply chain and logistics. In particular, they may not be adapted to really to meet on-time delivery constraints (i.e. "zero stock"), and to manage multiple transportation means (or means, or modes, of transport) for delivering the shipment from departure to destination: roads (trucks...), railways (trains...), air (planes...), sea (ships...)...

There is therefore needs for alternative solutions to alleviate the insufficiencies of the state-of-the-art proposals, or, at least, improve their performances.

### Summary

Embodiments of the invention comprise determining a transportation time between a departure point and a destination point, while a time constraint is associated with one of the departure point or the destination point.

One of the aims of the embodiments of the invention consists in determining the latest time of departure still ensuring the planned time of arrival at the destination time. This guaranties both that the shipment items will be delivered on-time at the destination point, and also that the stocking time will be minimized.

Accordingly, embodiments of the invention lies in determining the time of departure backward, starting from the planed destination time, i.e. contrary to many proposals of the state-of-the art, so as to determine the "latest" time of departure.

According to embodiments, the time constraint may be a known time of departure associated with the departure point, and a precise time of arrival at destination point is then determined.

Also, one of the aims of embodiments of the invention is to determine a latest time of departure compliant with legal regulations associated to the traversed countries.

Also, one of the aims of embodiments of the invention is to allow managing several transporting means for the route joining the departure point to the destination point.

Embodiments of the invention allows to meet other technical advantages as well, which will be explained later on in the description.

A first example embodiment proposes an apparatus for determining a transportation time of a shipment item from a departure point, to a destination point, one of said departure point or destination point being associated with a time constraint, said apparatus comprising means for performing:
- routing means for the determination of a sequence of route legs joining said departure point to said destination point; each route leg being associated with a transportation mean;
- determination means for the determination of respective transportation time for each leg, said determination being done starting from the one among departure point or destination point being associated with a time constraint;
- modification means for the modification of at least one respective transportation time determined for a route leg associated with roads, by applying a set of transportation time modifications;
- prediction means for the determination of said transportation time by adding said respective determined transportation time(s).

According to embodiments, this apparatus may comprise one or several of the following technical features, alone or in combination:
- said transportation time modifications are based on legal regulations associated to the countries traversed by the respective route leg;
- said modification means comprises modules, each of which being associated to a respective transportation time modification, and being adapted to add and remove said modules;
- the apparatus further comprises communication means for receiving requests from a client device containing data related at least to time constraint, said departure point and said destination point), and transmitting back a reply to said client device containing data related at least to said transportation time;
- the apparatus further comprises a set of servers and virtualization means for providing an interface for receiving said request and transmitting back said reply as a service;
- the apparatus further comprises at least one processor; and at least one memory including computer program code, the at least one memory and computer program code configured to, with the at least one processor, cause the performance of the routing means, determination means, modification means and prediction means;
- said time constraint is a planned time of arrival associated with said destination point, and said prediction means are configured to determine a latest time of departure at said departure point from said planned time of arrival and said transportation time.
- said time constraint is a known time of departure associated with said departure point, and said prediction means are configured to determine a precise time of arrival at said destination point from said known time of departure and said transportation time.

In a second example embodiment, a method is proposed for determining a transportation time of a shipment item from a departure point, to a destination point, one of said departure point or destination point being associated with a time constraint, and said method comprising
- the determination of a sequence of route legs joining said departure point to said destination point; each route leg being associated with a transportation mean;
- the determination of respective transportation time for each leg, said determination being done starting from the one among departure point or destination point being associated with a time constraint;
- the modification of at least one respective transportation time determined for a route leg associated with roads, by applying a set of transportation time modifications;
- the determination of said transportation time by adding said respective determined transportation time.

According to embodiments, this method may comprise one or several of the following technical features, alone or in combination:
- said transportation time modifications are based on legal regulations associated to the countries traversed by the respective route leg;
- the method further comprises receiving requests from a client device containing data related at least to time constraint, said departure point and said destination point, and transmitting back a reply to said client device containing data related at least to said transportation time;
- said time constraint is a planned time of arrival associated with said destination point, and the method comprises determining a latest time of departure at said departure point from said planned time of arrival and said transportation time;
- said time constraint is a known time of departure associated with said departure point, and the method comprises determining a precise time of arrival at said destination point from said known time of departure and said transportation time.

In a third example embodiment, a computer readable medium is proposed for encoding a machine-executable program of instructions to perform a method as previously defined.

### Brief Description of the Figures

Some embodiments are now described, by way of examples and with reference to the accompanying drawings, in which :
- Fig. 1 schematically illustrates an example use for an embodiment of the invention;
- Fig. 2 schematically illustrates an example of sequence of route legs, according to embodiments of the invention.
- Fig. 3 schematically represents a diagram of a method according to embodiments of the invention;
- Figs. 4 and 5 schematically illustrate flow charts according to embodiments of the invention;

### Description of Embodiments

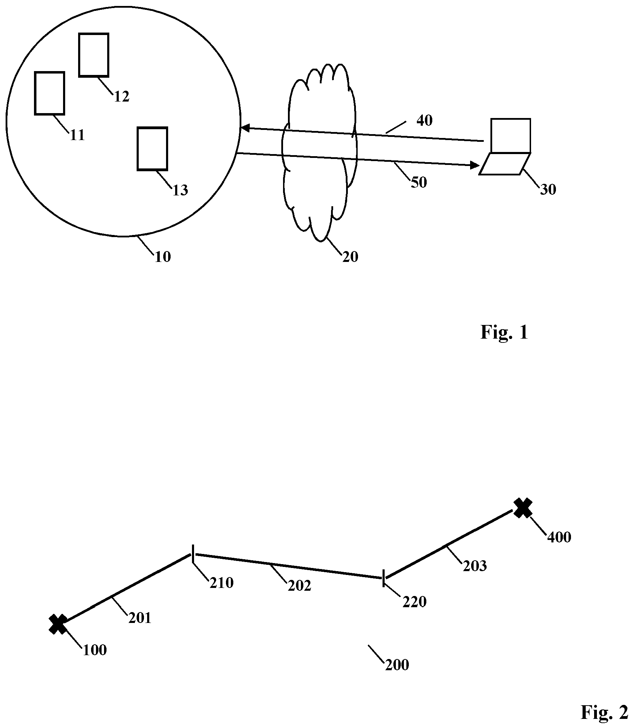

In reference to FIG. 1, a device client 30 can transmit requests 40 to an apparatus 10. The apparatus can have appropriate communication means to receive this request and technical means for processing this request according to its content. The apparatus 10 can then transmit back a reply 50, e.g. through appropriate communication means, to the client device 30.

According to embodiments, the request 40 and the reply 50 can flow through a telecommunication network 20. This communication network 20 can comprise access networks and backbone network, so as to allow communication between distant apparatus 10 and client device 30. Access networks, at client device side, may comply with various technologies like mobile network (3G, 4G, 5G...), WiFi, etc.

According to embodiments, the client device may be a mobile terminal, like a smartphone or a tablet, a mobile or fixed computer, etc.

According to embodiments, the apparatus 10 may comprise one or several servers 11, 12, 13. These servers may be physical servers, for instance arranged as a farm of servers, or virtual servers deployed over a set of physical machines.

According to embodiments, the apparatus comprises anyhow communication means and technical means for receiving and processing the request and transmitting back a reply. Accordingly, it may contain at least one processor; and at least one memory including computer program code, the at least one memory and computer program code being configured to, with the at least one processor, cause the performance of routing means, determination means, modification means and predicting means that will be further described in the following.

According to embodiments, the apparatus 10 comprises virtualization means for providing an interface for receiving said request and transmitting back said reply as a service. In other words, the client device 30 does not need to know about the architecture of the apparatus 10, and whatever the number and location of servers and machine, the client device needs only to know interface points to access the server.

In particular, the apparatus 10 can be deployed as a service available over a cloud.

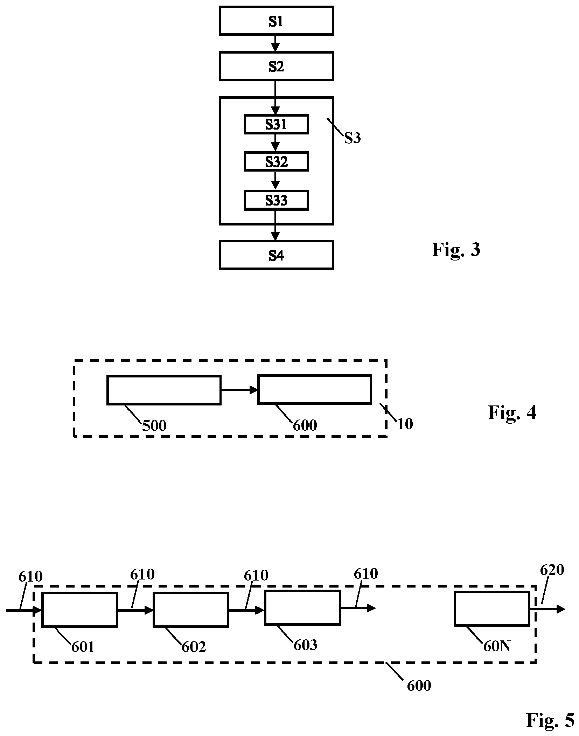

FIG. 3 represents an example sequence of steps according to an embodiment of a proposed method for determining a transportation time of a shipment item from a departure point, to a destination point. A time constraint may be associated with one among the departure point or the destination point. This time constraint is either a known time of departure associated with the departure point, or a planned time of arrival at the destination point. It shall be noticed that associating both time constraints to the destination and departure points is meaningless.

FIG. 2 schematically illustrates an example of sequence of route legs, according to embodiments of the invention: a route 200 is represented, as an example, as a sequence of route legs 201, 202, 203. The route 200 joins a departure point 100 to a destination point. Each route legs are linked together, as a sequence, by transit points 210, 220. The shipment item 300 is transported, by transportation means, from the departure point 100 to the destination point, through the sequence 200 of route legs and over the transit points 210, 220.

Transportation means (or means/modes of transport) comprise notably roads (trucks...), railways (trains...), air (planes...), sea (ships...)... In the following, the focus will be given to the types of means of transport (i.e. roads, railways, air, sea..., rather than the actual vehicle.

Each route leg may be associated with one transportation mean, and transit points concretizes a change of transportation means. Such changes may involve logistics requirements (like boarding/unboarding of a ship, etc.).

Shipment items shall be understood in a general and broad meaning and encompasses raw materials, elaborated materials, machines, and any item which shall be transported from one point to another over the world, especially for the purpose of further manufacturing or final selling to a customer.

The method may comprise the determination S1 of such a sequence 200 of route legs 201, 202, 203 joining said departure point 100 to said destination point 400; each route leg being associated with a transportation mean. This determination may be performed by routing means 500, as depicted in FIG. 4.

The determination of the sequence of route legs 201, 202, 203 may be performed according to different algorithms and heuristics.

In particular, a database of available route legs may be provisioned for some transportation means. For instance, sea and air transportation means employs fixed sections: from airport to airport or from harbour to harbour, respectively. In addition, some contracts may be signed beforehand with some transportation companies, so that the number of available sections, and corresponding schedules, may be limited.

These fixed sections once determined may constitute constraints for other route legs.

For instance, in the example depicted in FIG. 2, one can assume that route legs 201 and 203 are road transportation means, and 202 is a sea transportation mean. Then the route leg 202 may be determined according to a database of available sea sections, and by choosing the closest harbor to, respectively departure point 100 and destination point 400. Then, the route legs 201 and 203 may be conventionally determined between, respectively between the departure point 100 and a first transit point (i.e. harbour) 210 and between a second transit point (i.e. harbour) 211 and the destination point 400.

Then, in a second step S2, determination means 600 may determine the respective transportation time for each leg.

This determination starts from the end point associated with the time constraints, this end point being either the destination point or the departure point.

If the time constraint is a planned time of arrival associated with the destination point, this determination is done backward starting from the planned time of arrival.

If the time constraint is a known time of departure associated with the departure point, the determination is done forward starting from the known time of departure.

According to some embodiments illustrated by FIG. 5, this second step S2 can be performed by means 601 of determination means 600.

The time constraint can be an input parameter of the method step.

According to an embodiment, the planned time of arrival can be an input parameter to the method. It corresponds to the date and time at which the shipment item is expected at destination point.

This planned time can correspond to contractual relationships between a company in charge of the transportation of the shipment item and a company needing the shipment item at destination point, so that there may be a strong commercial and financial requirement to meet this planned time of arrival. As explained earlier, any deviation from the planned time of arrival may have strong impact:
- if the shipment item arrives too late, the production line may have to be stopped in wait for its actual arrival. Stopping a production line may jeopardize the financial situation of a company;
- if the shipment item arrives too early, this increase the amount of items to be stocked at destination point. Freezed stocks also involves costs for companies.

So, the decision means 600 can take as input the planned time of arrival and shall consider this input data as a strong requirement. The decision mean 600 can thus take as input data 610, notably, the planned time of arrival, the departure point, the destination point, and the route legs as determined by the routing means 500.

The route legs 201, 202, 203 form an ordered sequence 200, wherein each end of leg corresponds to the beginning of a subsequent leg. In this step S2, the determination means 600 can consider each route leg by starting by the last one, i.e. the one for which the end correspond to destination point 400.

Then, for each route leg, it can determine the respective transportation time.

For thus doing, the determination means 600, 601 can use several methods and several sources of data.

For instance, for a route leg associated with roads, the determination means 600, 601 may use available routing services like, for instance TomTom, ViaMichelin, Google map, etc. Appropriate interfaces (or API for Application Programming Interface) can be provided to allow the determination means to interwork with these services over the Internet, so as to retrieve the transportation time between two points in a map.

According to embodiments, a same or different service can provide a conversion between the format of input data and a format appropriate for the routing service. For instance, departure point, transit point, transportation point may be known as postal addresses (i.e. street, city, zip-code, country format). The conversion service can convert such addresses into geocode coordinates (i.e. latitude and longitude). Geocodes may then be provided to the routing service to get the transportation time.

As for air, the determination means 600, 601 can query airport databases to get the up-to-date scheduling of planes between the beginning and end of the route leg. Also, a database can be constituted by inserting all known air routes with known details of the routes, so that, the determination means can later query it to retrieve the required information.

Similar mechanisms can be provided for route legs associated to sea. For instance, some routing services like https://www.linescape.com/ can be used so as to get the up-to-date scheduling of boats between the beginning and end of the route leg.

Similar mechanisms can be provided for route legs associated to rails.

As the skilled person could imagine, other types of transportation could be added simply, each could be associated to a module which may be put in a module repository and call upon need by a main module of the determination means 600, 601.

For example, according to embodiments of the invention, from the planned time of arrival, and knowing the respective transportation time about the last route leg, the determination means can determine a intermediate time a transit point 220, i.e. at the beginning of the last route leg 203. Then, from this intermediate time a transit point 220, and knowing the respective transportation time about the previous route leg 202, the determination means 600 can determine an intermediate time at transit point 210, i.e. at the beginning of the previous route leg 202. By iterating the same process, from route leg to route leg, in the backward direction, the determination means 600, 601 can determine a time of departure at departure point 100 for the shipment item 200.

This time of departure depends only on the route 200 and is therefore the latest time of departure allowing to meet the expectation of arriving at the planned time of arrival. It is possible to have the shipment item leaves the departure point earlier, but this would involve stocking the shipment item 200 either at the destination point 400, or at any transit points 210, 220.

Then, in a step S3, modification means 600; 602, 603 are provided to modify at least one respective transportation time determined for a route leg associated with roads, by applying S31, S32, S33 a set of transportation time modifications to the transportation time previously determined.

Several modifications can be provided to a same transportation time associated to route leg.

According to embodiments, as depicted on FIG. 4, the modification means can be provided by a same module 600 as the determination mean,; as well as the prediction means as will be explained later on. This module can be a high-level functional module, comprising several sub-modules, or a stand-alone module configured to perform several functions. It shall be understood that the skilled person can derive several design implementations.

In particular, according to embodiments, the determination means 600 comprises modules 602, 603, each of which being associated to a respective transportation time modification.

Furthermore, according to embodiments, the determining means 600 may be adapted to add and remove these modules. For instance, when a new time modification module becomes available, it can be easily inserted into the determining means and chained with the other time modification modules.

Similarly, modules can be easily removed, or modified, or temporally suspended, etc., so as to provide flexibility to the management of the determination mean 600.

According to embodiments, transportation time modifications may be based on legal regulations associated to the countries traversed by the respective route leg.

For instance, a first transportation time modification, provided at step S31 by module 602, may consist in applying legal regulations on drivers' rests.

In particular, these regulations may depend on the jurisdiction associated with the route leg. These regulation depend on the country and may be based on other higher-level legal system, like European Union for instance.

In particular, regulation (EC) No 561/2006 provides a common set of EU rules for maximum daily and fortnightly driving times, as well as daily and weekly minimum rest periods for all drivers of road haulage and passenger transport vehicles, subject to specified exceptions and national derogations.

The scope of operations regulated is tremendously diverse, it includes: passenger transport and road haulage operations, both international and national, long and short distance, drivers for own account and for hire and reward, employees and self-employed.

The aim of this set of rules is to avoid distortion of competition, improve road safety and ensure drivers' good working conditions within the European Union.

These rules establish that:
- Daily driving period shall not exceed 9 hours, with an exemption of twice a week when it can be extended to 10 hours.
- Total weekly driving time may not exceed 56 hours and the total fortnightly driving time may not exceed 90 hours.
- Daily rest period shall be at least 11 hours, with an exception of going down to 9 hours maximum three times a week. Daily rest can be split into 3 hours rest followed by 9 hour rest to make a total of 12 hours daily rest
- Weekly rest is 45 continuous hours, which can be reduced every second week to 24 hours. Compensation arrangements apply for reduced weekly rest period. Weekly rest is to be taken after six days of working, except for coach drivers engaged in a single occasional service of international transport of passengers who may postpone their weekly rest period after 12 days in order to facilitate coach holidays.
- Breaks of at least 45 minutes (separable into 15 minutes followed by 30 minutes) should be taken after 4 ½ hours at the latest.

According to embodiments, these legal regulations are taken into account to apply transportation time modifications onto the previously-determined transportation time for the respective route leg. In general, the transportation time will be increased according to the drivers' rests required by these legal regulations.

According to embodiments, a second transportation time modification, provided at step S32 by module 603, may consist in applying legal regulations related to driving bans on a per-country basis.

These driving bans may be based on labour laws, preventing working (and in particular driving) on certain days of the week or on certain dates

Also, some bans may be based on other laws, like those regulating truck driving in certain countries to avoid traffic jams, on certain dates.

For instance, in France, most heavy goods vehicles over 7.5 tonnes are banned from the French road and motorway network every weekend between the hours of 10 p.m. Saturday and 10 p.m. Sunday. In Italy, gross weight over 7.5t is banned from 08:00-22:00 on Sundays between October and May, and from 07:00 to 24:00 from June to September. The ban also applies on public holidays and days of heavy traffic. There are exceptions for trucks carrying perishable produce or fuels.

All these legal regulations may be stored in a database, and kept updated according to any new regulations, so that the appropriate legal regulations can be applied to modify the previously-determined transportation time.

Other transportation time modification(s) can be further applied in step(s) S33. These various transportation time modifications can be applied to a same transportation time, and chained together, as depicted on FIG. 5.

Although, the described embodiments are based on road transportation means, some transportation time modification modules may be provided for other types of transportation.

Whatever the type of route leg, any event which could impact the transportation time can be embodied as a dedicated module of the modification means 600, 602, 603. For instance, any event which may impact the traffic but which may not be reflected by the determination means, can be embodied as such a module. Events related to legal regulations (different that the ones previously mentioned) may also be embodied as such a module.

According to embodiments, prediction means 600, 60N, are provided for the determination, in a step S4, of the (overall) transportation time from the departure point 100 to the destination point 400, by adding all the respective determined transportation time of each route legs. According to the type of route legs, some of the determined transportation times, at least, may be impacted by the application of transportation time modifications.

According to embodiments, the prediction means may be configured to
- determine a latest time of departure by deducing the transportation time from the planned time of arrival, when the time constraint is a planned time of arrival associated with the destination point, or,
- determine a precise time of arrival by adding the transportation time to the known departure time, when the time constraint is a known time of departure associated with the departure point.

Accordingly, the time constraint provided in association with the departure or destination point are taken into account so as to determine, respectively, the precise time of arrival at destination point or the latest time of departure at departure point, while considering any constraints linked to the route legs used for transporting the shipment item.

In particular, according to embodiments, by meeting the constraints of departing at latest at this predicted latest time of departure, one can ensure that the shipment item will arrive at the destination point 400 at the planned time of arrival, while respecting any legal requirements or any other events embodied by the modification means.

A person of skill in the art would readily recognize that steps of various above-described methods can be performed by programmed computers.

The skilled person shall appreciate that the invention apparently will not be limited to the foregoing exemplary embodiments and can be embodied in other specific forms without departing from the terms of the invention as captured essentially by the granted claims.

Accordingly, the invention shall encompass equivalent features to those described therein. Furthermore, the embodiments shall be construed anyway to be exemplary and non-limiting. Moreover apparently the term "comprising" will not preclude another element(s) or step(s), and the term "a" or "an" will not preclude plural. A plurality of elements stated in an apparatus claim can alternatively be embodied as a single element. The terms "first", "second", etc., are intended to designate a name but not to suggest any specific order.

## Claims

1. Apparatus (10) for determining a transportation time of a shipment item (300) from a departure point (100), to a destination point (400), one of said departure point or destination point being associated with a time constraint, said apparatus comprising means for performing:
- routing means (500) for the determination (S1) of a sequence (200) of route legs (201, 202, 203) joining said departure point to said destination point; each route leg being associated with a transportation mean;
- determination means (600; 601) for the determination (S2) of respective transportation time for each leg, said determination being done starting from the one among departure point or destination point being associated with a time constraint;
- modification means (600; 602, 603) for the modification (S3) of at least one respective transportation time determined for a route leg associated with roads, by applying (S31, S32, S33) a set of transportation time modifications;
- prediction means (600; 60N) for the determination (S4) of said transportation time by adding said respective determined transportation time(s).

2. Apparatus according to the previous claim, wherein said transportation time modifications are based on legal regulations associated to the countries traversed by the respective route leg.

3. Apparatus according to any of the previous claim, wherein said modification means comprises modules, each of which being associated to a respective transportation time modification, and being adapted to add and remove said modules.

4. Apparatus (10) according to any of the previous claims, further comprising communication means for receiving requests (40) from a client device (30) containing data related at least to time constraint, said departure point (100) and said destination point (400), and transmitting back a reply (50) to said client device (30) containing data related at least to said transportation time.

5. Apparatus according to the previous claim, comprising a set of servers (11, 12, 13) and virtualization means for providing an interface for receiving said request and transmitting back said reply as a service.

6. Apparatus according to any of the preceding claims, further comprising at least one processor; and at least one memory including computer program code, the at least one memory and computer program code configured to, with the at least one processor, cause the performance of the routing means (500), determination means (600; 601), modification means (600; 602, 603) and prediction means (600; 60N).

7. Apparatus according to any of the preceding claims, wherein said time constraint is a planned time of arrival associated with said destination point (400), and said prediction means are configured to determine a latest time of departure at said departure point (100) from said planned time of arrival and said transportation time.

8. Apparatus according to any of claims 1 to 6, wherein said time constraint is a known time of departure associated with said departure point (100), and said prediction means are configured to determine a precise time of arrival at said destination point (400) from said known time of departure and said transportation time.

9. Method for determining a transportation time of a shipment item (300) from a departure point (100), to a destination point (400), one of said departure point or destination point being associated with a time constraint, and said method comprising
- the determination (S1) of a sequence (200) of route legs (201, 202, 203) joining said departure point to said destination point; each route leg being associated with a transportation mean;
- the determination (S2) of respective transportation time for each leg, said determination being done starting from the one among departure point or destination point being associated with a time constraint;
- the modification (S3) of at least one respective transportation time determined for a route leg associated with roads, by applying (S31, S32, S33) a set of transportation time modifications;
- the determination (S4) of said transportation time by adding said respective determined transportation time.

10. Method according to the previous claim, wherein said transportation time modifications are based on legal regulations associated to the countries traversed by the respective route leg.

11. Method according to claim 9 or 10, further receiving requests (40) from a client device (30) containing data related at least to time constraint, said departure point (100) and said destination point (400), and transmitting back a reply (50) to said client device (30) containing data related at least to said transportation time.

12. Method according to any of claims 9 to 11, wherein said time constraint is a planned time of arrival associated with said destination point (400), and the method comprises determining a latest time of departure at said departure point (100) from said planned time of arrival and said transportation time.

13. Method according to any of claims 9 to 11, wherein said time constraint is a known time of departure associated with said departure point (100), and the method comprises determining a precise time of arrival at said destination point (400) from said known time of departure and said transportation time.

14. A computer readable medium encoding a machine-executable program of instructions to perform a method according to any one of claims 9 to 13.

## Amended claims

### Amended claims in accordance with Rule 137(2) EPC.

1. Apparatus (10) for determining a transportation time of a shipment item (300) from a departure point (100), to a destination point (400), one of said departure point or destination point being associated with a time constraint, said apparatus comprising means for performing:
- routing means (500) for the determination (S1) of a sequence (200) of route legs (201, 202, 203) joining said departure point to said destination point; each route leg being associated with a transportation mean;
- determination means (600; 601) for the determination (S2) of respective transportation time for each leg, said determination being done starting from the one among departure point or destination point being associated with a time constraint;
- modification means (600; 602, 603) for the modification (S3) of at least one respective transportation time determined for a route leg associated with roads, by applying (S31, S32, S33) a set of transportation time modifications;
- prediction means (600; 60N) for the determination (S4) of said transportation time by adding said respective determined transportation time(s).

2. Apparatus according to the previous claim, wherein said transportation time modifications are based on legal regulations associated to the countries traversed by the respective route leg.

3. Apparatus according to any of the previous claim, wherein said modification means comprises modules, each of which being associated to a respective transportation time modification, and being adapted to add and remove said modules.

4. Apparatus (10) according to any of the previous claims, further comprising communication means for receiving requests (40) from a client device (30) containing data related at least to time constraint, said departure point (100) and said destination point (400), and transmitting back a reply (50) to said client device (30) containing data related at least to said transportation time.

5. Apparatus according to the previous claim, comprising a set of servers (11, 12, 13) and virtualization means for providing an interface for receiving said request and transmitting back said reply as a service.

6. Apparatus according to any of the preceding claims, further comprising at least one processor; and at least one memory including computer program code, the at least one memory and computer program code configured to, with the at least one processor, cause the performance of the routing means (500), determination means (600; 601), modification means (600; 602, 603) and prediction means (600; 60N).

7. Apparatus according to any of the preceding claims, wherein said time constraint is a planned time of arrival associated with said destination point (400), and said prediction means are configured to determine a latest time of departure at said departure point (100) from said planned time of arrival and said transportation time.

8. Apparatus according to any of claims 1 to 6, wherein said time constraint is a known time of departure associated with said departure point (100), and said prediction means are configured to determine a precise time of arrival at said destination point (400) from said known time of departure and said transportation time.

9. Method for determining a transportation time of a shipment item (300) from a departure point (100), to a destination point (400), one of said departure point or destination point being associated with a time constraint, and said method comprising steps performed by an apparatus including:
- the determination (S1) of a sequence (200) of route legs (201, 202, 203) joining said departure point to said destination point; each route leg being associated with a transportation mean;
- the determination (S2) of respective transportation time for each leg, said determination being done starting from the one among departure point or destination point being associated with a time constraint;
- the modification (S3) of at least one respective transportation time determined for a route leg associated with roads, by applying (S31, S32, S33) a set of transportation time modifications;
- the determination (S4) of said transportation time by adding said respective determined transportation time.

10. Method according to the previous claim, wherein said transportation time modifications are based on legal regulations associated to the countries traversed by the respective route leg.

11. Method according to claim 9 or 10, further receiving requests (40) from a client device (30) containing data related at least to time constraint, said departure point (100) and said destination point (400), and transmitting back a reply (50) to said client device (30) containing data related at least to said transportation time.

12. Method according to any of claims 9 to 11, wherein said time constraint is a planned time of arrival associated with said destination point (400), and the method comprises determining a latest time of departure at said departure point (100) from said planned time of arrival and said transportation time.

13. Method according to any of claims 9 to 11, wherein said time constraint is a known time of departure associated with said departure point (100), and the method comprises determining a precise time of arrival at said destination point (400) from said known time of departure and said transportation time.

14. A computer readable medium encoding a machine-executable program of instructions to perform a method according to any one of claims 9 to 13.
